# EUROPÄISCHE PATENTANMELDUNG

(11) **EP 3 692 863 A1**
(43) Veröffentlichungstag der Anmeldung: **12.08.2020**
(21) Anmeldenummer: 19155793.3
(22) Anmeldetag: 06.02.2019
(51) Int. Cl.: A47G 21/04, G01F 19/00

(54) **FALTBARE DOSIERVORRICHTUNG**

(71) Anmelder: Edelmann GmbH, 89518 Heidenheim (DE)
(72) Erfinder: HOFFMANN, Manfred, 89518 Heidenheim (DE); NEMEC, Rolf, 89547 Gerstetten (DE); SIEBER, Helmut, 89518 Heidenheim (DE)
(74) Vertreter: Caspary, Karsten

(57) **Zusammenfassung**

Eine erfindungsgemäße faltbare Dosiervorrichtung (2) ist aus einem einteiligen Zuschnitt (12) gebildet und wiederholbar zwischen einem ersten Zustand und einem zweiten Zustand faltbar. Die Dosiervorrichtung (2) ist im ersten Zustand derart gefaltet, dass sie eben ausgebildet ist und zwei Materiallagen (46, 48) der Dosiervorrichtung (2) bildet, die flächig aneinander anliegen. Die Dosiervorrichtung (2) ist im zweiten Zustand derart gefaltet, dass sie einen Griffbereich (4) und einen Schüttbereich (6) aufweist. Der einteilige Zuschnitt (12) umfasst eine erste Lasche (14) und eine zweite Lasche (16), die den Griffbereich (4) bilden, und eine Mehrzahl von Laschen (18, 20), die im zweiten Zustand den Schüttbereich (6) bilden, wobei die Mehrzahl von Laschen (18, 20) zumindest eine dritte und eine vierte Lasche (18, 20) umfasst. Die erste Lasche (14) weist nur mit der dritten Lasche (18) eine gemeinsame Faltlinie (26) auf und die zweite Lasche (16) weist nur mit der vierten Lasche (20) eine gemeinsame Faltlinie (28) auf.

## Beschreibung

Die Erfindung betrifft eine faltbare Dosiervorrichtung, insbesondere einen faltbaren Löffel oder Trichter, zum Aufnehmen und Dosieren von Schüttgut.

Es sind faltbare Dosiervorrichtung bekannt, die aus einem einteiligen Zuschnitt aus Papier, Pappkarton oder Folie gebildet werden und in einem ersten Zustand flach ausgebildet sind, um platzsparend in Verpackungen des jeweiligen Schüttguts untergebracht zu werden oder außen an der Verpackung angebracht zu werden. Zum Beispiel können derartige Dosiervorrichtungen Verpackungen von Waschpulver, Nahrungsmitteln, Nahrungsergänzungsmitteln oder Medikamenten beigefügt werden, um die Entnahme der jeweils empfohlenen Portion oder den Verzehr zu ermöglichen.

Eine derartige Dosiervorrichtung in Form eines faltbaren Löffels ist beispielsweise aus der WO 96/32041 A1 bekannt. Die darin beschriebene Dosiervorrichtung weist einen Griffbereich zum Greifen der Dosiervorrichtung und einen Schüttbereich zur Aufnahme des Schüttguts, z. B. Milchpulver, auf. Der faltbare Löffel ist aus einem Materialzuschnitt gebildet, der zunächst in einem ebenen Zustand vorliegt und so platzsparend einer Verpackung beigefügt werden kann. Vor der Verwendung muss zunächst der Löffel aus diesem Zuschnitt gebildet werden, um dann entsprechende Portionsgrößen des Schüttguts zu entnehmen.

Derartige Dosiervorrichtung bzw. Löffel haben jedoch den Nachteil, dass vor dem erstmaligen Gebrauch eine Mehrzahl von Laschen, aus denen der Schüttbereich zur Aufnahme des Schüttguts gebildet wird, mittels zumindest einer Klebelasche verklebt werden müssen, und zumindest eine weitere Klebelasche mit dem Griffbereich verklebt werden muss. Sind die einzelnen Laschen bzw. Abschnitte der Dosiervorrichtung erst einmal miteinander verklebt, kann die Dosiervorrichtung nicht mehr in einen vollständig ebenen Zustand gefaltet werden, so dass sie mehr Platz innerhalb der Verpackung beansprucht oder gar nicht mehr in oder an der Verpackung untergebracht werden kann.

Zudem ist der Griffbereich in einer Ebene ausgebildet und eine Gewichtskraft des im Schüttbereich aufgenommenen Schüttguts wirkt im Wesentlichen senkrecht zu dieser Ebene. Es besteht daher das Risiko, dass der Griffbereich bei befülltem Schüttbereich nachgibt und das im Schüttbereich aufgenommene Schüttgut verlorengeht.

Es ist daher die Aufgabe der vorliegenden Erfindung, eine verbesserte faltbare Dosiervorrichtung bereitzustellen, die insbesondere platzsparend aufzubewahren ist und zugleich einen einfachen Aufbau und eine hohe Stabilität aufweist.

Diese Aufgabe wird durch den Gegenstand des Anspruchs 1 gelöst. Bevorzugte Ausführungsformen sind Gegenstand der abhängigen Ansprüche.

Eine erfindungsgemäße faltbare Dosiervorrichtung ist aus einem einteiligen Zuschnitt gebildet und wiederholbar zwischen einem ersten Zustand und einem zweiten Zustand faltbar. Die Dosiervorrichtung ist im ersten Zustand derart gefaltet, dass sie eben ausgebildet ist und zwei Materiallagen der Dosiervorrichtung bildet, die flächig aneinander anliegen. Im zweiten Zustand ist die Dosiervorrichtung derart gefaltet, dass sie einen Griffbereich zum Greifen der Dosiervorrichtung und einen Schüttbereich zur Aufnahme von Schüttgut aufweist. Der einteilige Zuschnitt umfasst eine erste Lasche und eine zweite Lasche, die miteinander verbunden sind, im ersten Zustand und im zweiten Zustand flächig aneinander anliegen und den Griffbereich bilden. Zudem umfasst der einteilige Zuschnitt eine Mehrzahl von Laschen, die im zweiten Zustand den Schüttbereich bilden, wobei die Mehrzahl von Laschen zumindest eine dritte und eine vierte Lasche umfasst, die im ersten Zustand flächig aneinander anliegen, wobei die dritte Lasche entlang einer ersten Faltlinie an die erste Lasche angrenzt und die vierte Lasche entlang einer zweiten Faltlinie an die zweite Lasche angrenzt. Die erste Lasche weist nur mit der dritten Lasche eine gemeinsame Faltlinie auf und die zweite Lasche weist nur mit der vierten Lasche eine gemeinsame Faltlinie auf.

Auf diese Weise wird eine Dosiervorrichtung bereitgestellt, die wiederholt zwischen dem ersten und dem zweiten Zustand faltbar ist und im ersten Zustand eben ausgebildet ist, um immer wieder platzsparend gelagert werden zu können. Die einzelnen Laschen des Zuschnitts der Dosiervorrichtung sind mittels Faltlinien verbunden und nur die den Griffbereich bildenden Laschen, die erste und die zweite Lasche, sind flächig miteinander verbunden, z. B. verklebt. Da die Dosiervorrichtung trotz dieser Verbindung in den ersten Zustand faltbar ist, kann die Verbindung schon werksseitig vorgesehen werden und ein Verbinden und Verkleben einzelner Laschen vor der erstmaligen Verwendung durch den Nutzer kann entfallen. Allenfalls ist höchstens eine Verbindung herzustellen, was den Aufwand vor der erstmaligen Verwendung reduziert.

Zum Übergang zwischen dem ersten und dem zweiten Zustand ist lediglich der Schüttbereich aufzufalten, was durch einen einfachen manuellen Eingriff zu bewerkstelligen ist. Ebenso kann der Schüttbereich durch einfaches Zusammendrücken der den Schüttbereich bildenden Mehrzahl von Laschen in den ersten Zustand zurückgeführt werden. Die Dosiervorrichtung lässt sich somit sehr einfach handhaben und nach Belieben zwischen dem ersten und dem zweiten Zustand verstellen. Es ist nicht notwendig, Verbindungen zwischen den Laschen der Dosiervorrichtung zunächst zu lösen oder herzustellen, bevor die Dosiervorrichtung verwendet oder wieder verstaut werden kann. Insbesondere kann auch auf lösbare Verbindungen, wie z. B. Steckverbindungen zwischen den Laschen verzichtet werden.

Durch den erfindungsgemäßen Aufbau der Dosiervorrichtung ist der Griffbereich zudem derart ausgebildet, dass er eine Ebene definiert und eine Gewichtskraft des im zweiten Zustand aufgenommenen Schüttguts in dieser Ebene bzw. parallel zu dieser Ebene wirkt. Dadurch weisen die Dosiervorrichtung und insbesondere der Griffbereich eine erhöhte Stabilität auf.

Die Dosiervorrichtung ist aus einem einteiligen Zuschnitt gebildet, der eine Materiallage aufweist, bevor er zur erfindungsgemäßen Dosiervorrichtung gefaltet und zusammengefügt wird. Durch Falten des Zuschnitts entlang einer Faltlinie liegen zwei Abschnitte des Zuschnitts flächig aneinander und bilden so zwei Materiallagen der Dosiervorrichtung, die im ersten Zustand flächig aneinander liegen. Die zwei Materiallagen der Dosiervorrichtung sind also durch eine Materiallage des Zuschnitts gebildet. In diesem Zustand werden die erste und die zweite Lasche miteinander verbunden. Es ist ersichtlich, dass die Dosiervorrichtung dadurch einen ebenen und sehr platzsparenden ersten Zustand aufweist, in dem die Dosiervorrichtung eine Dicke von gerade einmal der doppelten Stärke der Materiallage des Zuschnitts aufweist. In diesen ersten Zustand kann die Dosiervorrichtung stets zurückgeführt werden. Es versteht sich, dass die Dosiervorrichtung im ersten Zustand vollständig eben gehalten werden kann, so dass die zwei Materiallagen der Dosiervorrichtung über die gesamte einander zugwandte Fläche aneinander anliegen. Aufgrund der Rückstellkräfte des Zuschnitts, insbesondere im Bereich der Faltlinien, können die Materiallagen der Dosiervorrichtung jedoch auch geringfügig zueinander beabstandet sein und die Dosiervorrichtung etwas von einer vollständig ebenen Gestalt abweichen, wenn sie nicht durch zusätzliche Haltekräfte im ersten Zustand gehalten wird. Dies hängt insbesondere vom Material und der Materialstärke des Zuschnitts ab.

Die Ausbildung des Schüttbereichs kann im Wesentlichen beliebig an das aufzunehmende Schüttgut und die Funktion der Dosiervorrichtung angepasst werden. Unter Schüttgut wird allgemein ein körniges bzw. pulvriges Gemenge verstanden, das in einer schüttfähigen Form vorliegt. Die Eigenschaften eines Schüttguts werden im Wesentlichen durch dessen Korngröße und die Kornverteilung bestimmt. Im Rahmen der vorliegenden Erfindung sollen auch flüssige bzw. zähflüssige, beispielsweise gelförmige Medien unter dem Begriff Schüttgut verstanden werden. Der einteilige Zuschnitt bzw. zumindest die Mehrzahl von den Schüttbereich bildenden Laschen sind dann vorzugsweise in entsprechender Dicke oder aus einem entsprechenden Material ausgebildet, das ein Aufweichen der Dosiervorrichtung verhindert, und/oder weisen eine entsprechende Beschichtung auf.

In Abhängigkeit von der Funktion der Dosiervorrichtung und von dem aufzunehmenden Schüttgut kann die Dosiervorrichtung unterschiedlich ausgebildet sein. Um zum Aufnehmen und Halten von Schüttgut zu dienen, wie es z B. bei Dosierlöffeln oder -bechern der Fall ist, ist der Schüttbereich vorzugsweise so ausgebildet, dass er sowohl entlang seiner Umfangsflächen als auch nach unten hin geschlossen ist. Alternativ kann der Schüttbereich auch Öffnungen aufweisen, deren Dimensionen kleiner sind als die Korngröße des aufzunehmenden Schüttguts. Soll die Dosiervorrichtung hingegen zur Aufnahme und gezielten Abgabe von Schüttgut ausgebildet sein, wie z. B. bei einem Trichter oder Sieb, kann der Schüttbereich an einem unteren Ende und/oder an der Umfangsfläche eine oder mehrere Öffnungen aufweisen, die den Durchtritt von Schüttgut erlauben.

In einer bevorzugten Ausführungsform umfasst die Mehrzahl von Laschen eine gerade Anzahl von Laschen, von denen zwei Laschen entlang einer gemeinsamen Faltlinie aneinander angrenzen, wobei diese gemeinsame Faltlinie im ersten und im zweiten Zustand in einer Ebene liegt, in der die erste Lasche und die zweite Lasche flächig aneinander anliegen. Dadurch kann die Dosiervorrichtung im Wesentlichen unabhängig von der Größe und Geometrie der Mehrzahl an Laschen und des Schüttbereichs einfach in den ersten Zustand gefaltet werden. Zudem ist es möglich, durch Aufbringen eines geringen Drucks im Bereich dieser gemeinsamen Faltlinie die Dosiervorrichtung aus dem ersten Zustand in den zweiten Zustand zu überführen.

Vorzugsweise umfasst die Mehrzahl von Laschen eine fünfte und eine sechste Lasche, die im zweiten Zustand zusammen mit der dritten und der vierten Lasche den Schüttbereich bilden, wobei die dritte Lasche entlang einer dritten Faltlinie an die fünfte Lasche angrenzt, die vierte Lasche entlang einer vierten Faltlinie an die sechste Lasche angrenzt, und die fünfte und die sechste Lasche entlang einer fünften Faltlinie aneinander angrenzen. Die fünfte Faltlinie bildet dann die zuvor beschriebene gemeinsame Faltlinie. Der Schüttbereich besteht in dieser Ausführungsform aus vier Laschen, die vorzugsweise im Wesentlichen pyramidenförmig angeordnet sind. Die so gebildete Dosiervorrichtung weist aufgrund der geringen Anzahl von Laschen einen einfachen Aufbau auf, der einen wohldefinierten Schüttbereich zur Aufnahme von Schüttgut bildet, der dazu geeignet ist, den zweiten Zustand selbstständig beizubehalten. Es versteht sich, dass die Mehrzahl von Laschen eine beliebige Anzahl von Laschen umfassen kann. Je mehr aneinander angrenzende und durch Faltlinien miteinander verbundene Laschen die Mehrzahl von Laschen zum Bilden des Schüttbereichs umfasst, desto mehr nähert sich der Schüttbereich im zweiten Zustand einer runden Form an.

Die Laschen der Mehrzahl von Laschen weisen bevorzugt eine Polygonform, mehr bevorzugt eine im Wesentlichen dreieckige Form auf. Dadurch kann ein Schüttbereich gebildet werden, der zu einem Ende hin zuläuft, um eine geschlossene Aufnahme oder eine Trichterform zu bilden. Zugleich lassen sich die Laschen der Mehrzahl von Laschen einfach relativ zueinander falten, auch in den flachen ersten Zustand. Als polygone Form kommt neben einer dreieckigen Form auch jede andere polygone Form in Frage, wie z. B. Trapez- oder Rautenformen. Die Dosiervorrichtung kann beliebig an die gegebenen Anforderungen und Wünsche angepasst werden.

In einer bevorzugten Ausführungsform treffen die Laschen der Mehrzahl von Laschen in einem gemeinsamen Punkt zusammen. Der Schüttbereich ist dann derart ausgebildet, dass er sich zu dem gemeinsamen Punkt hin verjüngt. Dies kann insbesondere erreicht werden, wenn die Laschen der Mehrzahl von Laschen im Wesentlichen dreieckig oder rautenförmig ausgebildet sind, jeweils mit einer Seite an einer benachbarten Lasche angrenzen und sich die Spitzen der Laschen im gemeinsamen Punkt treffen. Dadurch kann vor allem ein geschlossener Schüttbereich gebildet werden, der sich besonders gut zur Aufnahme von feinem körnigen oder pulvrigen sowie von flüssigem Schüttgut eignet.

Die Laschen der Mehrzahl von Laschen können sich auch nicht in einem gemeinsamen Punkt treffen. Die ist z. B. der Fall, wenn die Laschen im Wesentlichen trapezförmig ausgebildet sind und die Laschen mit den nicht parallelen Seiten der Trapeze aneinander angrenzen. Die parallelen Seiten der Trapeze bilden dann einen oberen und einen unteren Rand, die jeweils eine Öffnung des Schüttbereichs definieren, die unterschiedliche Durchmesser aufweisen. Hierdurch wird ein Schüttbereich gebildet, der z. B. als Trichter verwendet werden kann.

Es ist bevorzugt, dass die Mehrzahl von Laschen im zweiten Zustand einen umlaufenden Rand des Schüttbereichs definieren, der eine Öffnung zum Einfüllen von Schüttgut in den Schüttbereich bildet, und dass die Laschen ausgehend vom Rand eine Vertiefung zum Aufnehmen von Schüttgut bilden. Der umlaufende Rand kann polygonförmig ausgebildet sein und sich im Wesentlichen in einer Ebene erstrecken. Der Rand kann aber auch eine Kontur, beispielsweise Zacken aufweisen, und sich somit im Wesentlichen dreidimensional erstrecken. Zudem kann der Rand dazu dienen das aufzunehmende Schüttgut von übrigem Schüttgut zu trennen, beispielsweise wenn dessen Bestandteile aneinander haften, wie z. B. bei feuchten Pulvern.

Die Vertiefung kann sich ausgehend vom Rand bis zu einer zweiten Öffnung erstrecken, um so einen Trichter zu bilden. Vorzugsweise erstreckt sich die Vertiefung jedoch vom umlaufenden Rand bis zum gemeinsamen Punkt der Mehrzahl von Laschen, um eine im Wesentlichen geschlossene Vertiefung zur Aufnahme von Schüttgut zu bilden.

Einen besonders einfachen Aufbau weist die Dosiervorrichtung auf, wenn der Griffbereich nur aus erster und zweiter Lasche besteht. Insbesondere, wenn diese nur flächig aneinander anliegen und miteinander verbunden sind, kann die Dosiervorrichtung besonders einfach aus dem Zuschnitt gebildet werden. Eine gemeinsame Faltlinie zwischen der ersten und der zweiten Lasche besteht nicht. Trotz des einfachen Aufbaus wird dabei eine ausreichende Stabilität der Dosiervorrichtung gewährleistet.

Es ist ferner bevorzugt, dass die erste und die zweite Lasche unlösbar miteinander verbunden sind, vorzugsweise flächig miteinander verklebt sind. Noch mehr bevorzugt sind neben der Verbindung der ersten und der zweiten Lasche keine weiteren Verbindungen zwischen Laschen der Dosiervorrichtungen herzustellen. Dadurch entfällt ein aufwändiges Zusammen- oder Auseinanderbauen der Dosiervorrichtung zum Wechsel zwischen dem ersten und dem zweiten Zustand, sowie vor der erstmaligen Verwendung der Dosiervorrichtung. Vielmehr ist es möglich, lediglich durch Auf- und Zusammenfalten des Schüttbereichs den Übergang aus dem ersten in den zweiten Zustand und umgekehrt zu bewerkstelligen. Die Dosiervorrichtung ist aber trotz der dauerhaften Verbindung in den flachen ersten Zustand faltbar. Ein ungewolltes Lösen möglicher lösbarer Verbindungen, wie z. B. Steckverbindungen, wird zuverlässig vermieden. Es ist daher weiterhin bevorzugt, dass der Zuschnitt schlitzfrei ausgebildet ist. Schlitzfrei bedeutet dabei, dass keine den Zuschnitt durchdringenden Schlitze zum Einschieben von Laschen (-abschnitten) eingebracht sind. Dadurch können auch der Herstellungsaufwand des Zuschnitts reduziert und Materialschwächungen vermieden werden.

Es ist aber auch denkbar, dass der Zuschnitt Ritzlinien oder Perforationen aufweist, die vor allem entlang der Faltlinien ausgebildet sein können. Derartige Ritzlinien oder Perforationen vereinfachen das Falten der Dosiervorrichtung und definieren die Faltlinien. Dies ist besonders vorteilhaft, wenn die Dosiervorrichtung bzw. der Zuschnitt aus einem Material dicker Wandstärke und/oder einem Material erhöhter Widerstandskraft gebildet ist.

Besonders bevorzugt weist der Zuschnitt ausgehend von einem Rand der Mehrzahl von Laschen, die den Schüttbereich bilden, eine Ausnehmung auf, die vorzugsweise in dem Bereich einer Faltlinie zwischen zwei aneinander angrenzenden Laschen der Mehrzahl von Laschen ausgebildet ist. Diese Ausnehmung bildet eine Griffmulde zum Öffnen des Schüttbereichs, um die Dosiervorrichtung vom ersten Zustand in den zweiten Zustand zu überführen. Die Dosiervorrichtung ist im ersten Zustand derart gefaltet, dass sie eben ausgebildet ist und zwei Materiallagen der Dosiervorrichtung bildet. Die Materiallagen der Dosiervorrichtung sind dabei bevorzugt deckungsgleich, so dass ein Eingriff zwischen die Materiallagen erschwert sein kann. Die Ausnehmung in einer Materiallage der Dosiervorrichtung legt im ersten Zustand einen Abschnitt der dahinter liegenden Materiallage frei, so dass einfach zwischen die zwei Materiallagen eingegriffen werden kann, um die Dosiervorrichtung in den zweiten Zustand aufzufalten.

Bevorzugt weist der Zuschnitt entlang zumindest einer Faltlinie eine Materialschwächung, insbesondere eine Ritzlinie oder Perforationslinie auf. Die Materialschwächung deckt sich vorzugsweise mit der jeweiligen Faltlinie und erstreckt sich zumindest entlang eines Teils der Länge der jeweiligen Faltlinie. Dadurch wird ein einfaches Falten entlang einer vordefinierten Faltlinie gewährleistet, was insbesondere bei dickeren Materialien vorteilhaft ist.

In einer Ausführungsform weist der Zuschnitt eine Vorderseite und eine Rückseite auf, und eine Ritzlinie entlang der ersten Faltlinie und eine Ritzlinie entlang der zweiten Faltlinie sind nur auf der Rückseite ausgebildet, während eine Ritzlinie oder Ritzlinien, die entlang der Faltlinie oder der Faltlinien zwischen der Mehrzahl von Laschen ausgebildet sind, auf der Vorderseite ausgebildet sind. Dadurch lässt sich die gesamte Dosiervorrichtung besonders einfach zwischen dem ersten und dem zweiten Zustand falten. Die Ritzlinien sind dabei jeweils auf der Seite des Zuschnitts angeordnet, auf der der Winkel zwischen zwei an einer gemeinsamen Faltlinie aneinander angrenzenden Laschen größer als 180° ist. Dadurch wird ein einfaches Falten gewährleistet und die Rückstellkräfte, die auf die Laschen wirken, werden reduziert. Die Ritzlinien können aber auch auf der jeweils anderen Seite, also insbesondere auf der Seite des Zuschnitts angeordnet sein, auf der der Winkel zwischen zwei an einer gemeinsamen Faltlinie aneinander angrenzenden Laschen kleiner als 180° ist. Dadurch kann eine Faltenbildung im Bereich der Faltlinie(n) vermieden werden.

Besonders bevorzugt liegen die Flächen der ersten und der zweiten Lasche, die die Vorderseite des Zuschnitts bilden, dann flächig aneinander an.

Schließlich ist es bevorzugt, dass die Dosiervorrichtung derart ausgebildet ist, dass sie den zweiten Zustand selbständig beibehält. Dadurch wird gewährleistet, dass die Dosiervorrichtung bzw. der Schüttbereich einfach mit einem Schüttgut befüllt werden kann, da der Schüttbereich im zweiten Zustand geöffnet bleibt und sich die Dosiervorrichtung nicht von selbst in den ersten Zustand zurückstellt. Dies wird von einer Reihe von Faktoren beeinflusst, die der Fachmann entsprechend auslegen kann. Beispielhaft für entsprechende Faktoren seien das Material des Zuschnitts, die Materialstärke, das Vorsehen bzw. die Ausbildung von Materialschwächungen (Ritzlinien, Perforationslinien), die Ausprägung der Faltlinien, die Anzahl und die Geometrie der Mehrzahl von Laschen sowie die Größe und die Geometrie des Schüttbereichs aufgeführt.

Alternativ kann es gewünscht sein, dass sich die Dosiervorrichtung automatisch von selbst in den ersten Zustand zurückstellt und den zweiten Zustand nur beibehält, solange der Schüttbereich mit Schüttgut befüllt ist. Dadurch kann der Schritt des Zusammenfaltens der Dosiervorrichtung in den ersten Zustand entfallen. Dies kann z.B. dadurch erreicht werden, dass der Schrittbereich nur aus der dritten und der vierten Lasche gebildet wird, die zur Bildung des Schüttbereich aufgebogen werden und sich anschließend zurückstellen.

Weitere Merkmale und Vorteile der vorliegenden Erfindung ergeben sich aus der nachfolgenden Beschreibung der Figuren, in denen
- Fig. 1: eine perspektivische Ansicht einer Ausführungsform der erfindungsgemäßen Dosiervorrichtung ist;
- Fig. 2: eine Draufsicht eines Zuschnitts zur Bildung der Dosiervorrichtung nach Fig. 1 ist;
- Fig. 3a: eine Draufsicht der Dosiervorrichtung nach Fig. 1 in einem ersten Zustand der Dosiervorrichtung ist;
- Fig. 3b: eine Seitenansicht der Dosiervorrichtung nach Fig. 1 im ersten Zustand der Dosiervorrichtung ist; und
- Fig. 4: eine Draufsicht der Dosiervorrichtung nach Fig. 1 in einem zweiten Zustand der Dosiervorrichtung ist.

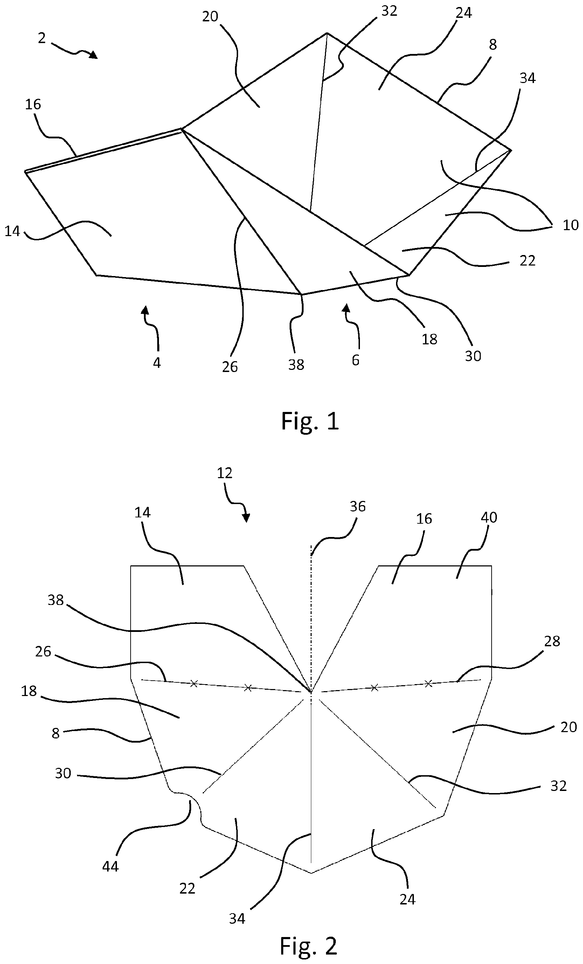

Fig. 1 zeigt eine Ausführungsform der erfindungsgemäßen Dosiervorrichtung 2 in einer perspektivischen Ansicht. Die Dosiervorrichtung 2 umfasst einen Griffbereich 4 zum Greifen der Dosiervorrichtung 2 und einen Schüttbereich 6 zur Aufnahme von Schüttgut. Hierzu bildet der Schüttbereich 6 eine Vertiefung, in der das Schüttgut aufgenommen werden kann. Der Schüttbereich 6 weist einen umlaufenden Rand 8 auf, von dem aus sich den Schüttbereich 6 umgebende Seitenwände 10 des Schüttbereichs erstrecken. Die Seitenwände 10 sind durch eine Mehrzahl von Laschen eines einteiligen Zuschnitts (siehe Fig. 2) gebildet. Der Griffbereich 4 ist durch zwei Laschen des einteiligen Zuschnitts (Fig. 2) gebildet, die flächig aneinander anliegen.

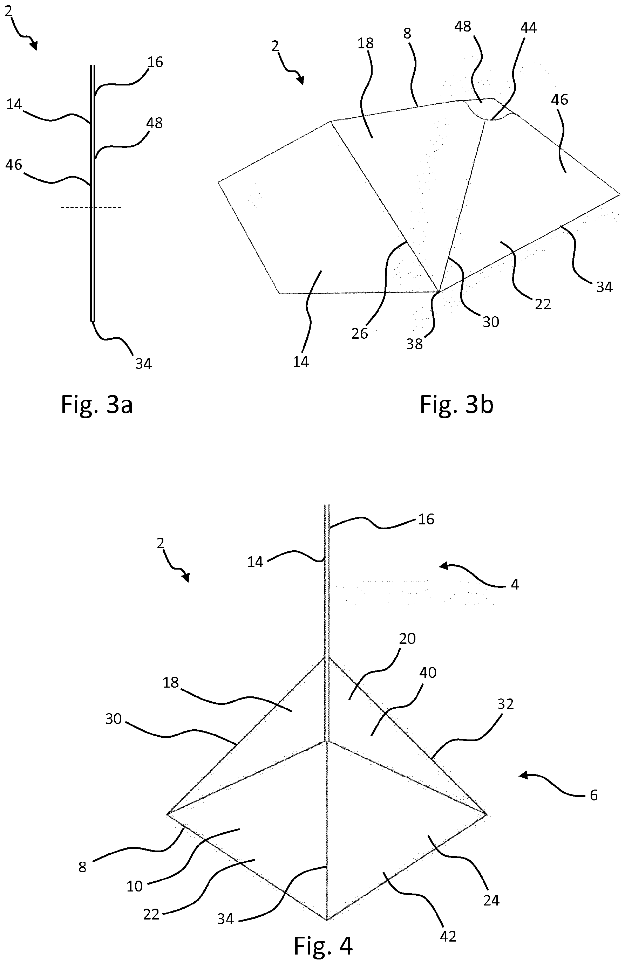

Die Dosiervorrichtung 2 ist wiederholbar zwischen einem ersten Zustand (Fig. 3a, b) und einem zweiten Zustand (Fig. 4) faltbar. Das heißt, dass sie zerstörungsfrei und ohne das Herstellen oder Auflösen weiterer Verbindungen zwischen dem ersten Zustand und dem zweiten Zustand hin und her gefaltet werden kann. Insbesondere ist es hierzu nicht notwendig, Verbindungsstellen oder das Material der Dosiervorrichtung bzw. des einteiligen Zuschnitts zu beschädigen.

Fig. 2 zeigt eine Draufsicht einer Ausführungsform eines einteiligen Zuschnitts 12 zur Bildung der Dosiervorrichtung 2. Der einteilige Zuschnitt 12 besteht bevorzugt aus Papier, Pappe oder Kartonmaterial und ist aus einem Bogen ausgestanzt oder ausgeschnitten. Der einteilige Zuschnitt 12 umfasst eine erste Lasche 14 und eine zweite Lasche 16 zur Bildung des Griffbereichs 4 der Dosiervorrichtung 2. Der Zuschnitt 12 umfasst ferner eine Mehrzahl von Laschen 18, 20 zum Bilden des Schüttbereichs 6 der Dosiervorrichtung 2. Die Mehrzahl von Laschen umfasst zumindest die dritte Lasche 18 und die vierte Lasche 20. In der dargestellten Ausführungsform umfasst die Mehrzahl von Laschen weiterhin die fünfte Lasche 22 und die sechste Lasche 24. Die dritte Lasche 18 grenzt entlang einer ersten Faltlinie 26 an die erste Lasche 14 an und die vierte Lasche 20 grenzt entlang einer zweiten Faltlinie 28 an die zweite Lasche 16 an. Es ist zu erkennen, dass die erste Lasche 14 nur mit der dritten Lasche 18 eine gemeinsame Faltlinie 26 aufweist, und dass die zweite Lasche 16 nur mit der vierten Lasche 20 eine gemeinsame Faltlinie 28 aufweist. Es besteht keine gemeinsame Faltlinie zwischen der ersten und der zweiten Lasche 14, 16.

Jeweils zwei Laschen der Mehrzahl von Laschen 18, 20, 22, 24 grenzen an einer gemeinsamen Faltlinie aneinander an. In der dargestellten Ausführungsform grenzt die dritte Lasche 18 entlang einer dritten Faltlinie 30 an die fünfte Lasche 22 an, die vierte Lasche 20 grenzt entlang einer vierten Faltlinie 32 an die sechste Lasche 24 an, und die fünfte und die sechste Lasche 22, 24 grenzen entlang einer fünften Faltlinie 34 aneinander an.

Es versteht sich, dass die Mehrzahl von Laschen, die zusätzlich zur ersten und zur zweiten Lasche 14, 16 vorgesehen ist, mindestens zwei Laschen 18, 20 umfasst. Zum Beispiel können eine dritte Lasche, die den Abschnitt der dargestellten dritten und fünften Lasche 18, 22 umfasst, und eine vierte Lasche, die den Abschnitt der dargestellten vierten und sechsten Lasche 20, 24 umfasst, vorgesehen sein. Die Faltlinien 30, 32 entfallen dann. Die Mehrzahl von Laschen kann aber auch nach Belieben mehr als zwei Laschen 18, 20 umfassen.

Es ist bevorzugt, dass der Zuschnitt 12 symmetrisch zu einer Symmetrieachse 36 ausgebildet ist. Insbesondere ist die Geometrie, Anzahl und Anordnung aller Laschen 14, 16, 18, 20, 22, 24 symmetrisch zur Symmetrieachse 36. Dabei ist es weiter bevorzugt, dass eine Faltlinie, hier die fünfte Faltlinie 34 auf der Symmetrieachse 36 liegt. Allgemein ausgedrückt umfasst die Mehrzahl von Laschen bevorzugt eine gerade Anzahl von Laschen 18, 20, 22, 24 von denen zwei Laschen 22, 24 entlang einer gemeinsamen Faltlinie 34 aneinander angrenzen, die auf der Symmetrieachse 36 liegt. Wie aus Fig. 3a und 4 ersichtlich ist, liegt diese gemeinsame Faltlinie 34 im ersten und im zweiten Zustand der Dosiervorrichtung 2 in einer Ebene, in der die erste Lasche 14 und die zweite Lasche 16 flächig aneinander anliegen.

In der dargestellten Ausführungsform nach Fig. 2 weist die Mehrzahl von Laschen 18, 20, 22, 24 eine dreieckige Form auf. Die erste und die zweite Lasche 14, 16 sind bevorzugt rauten- oder trapezförmig ausgebildet, um einen geeigneten Griffbereich 4 zu bilden. Dieser ist derart dimensioniert, dass er es dem Nutzer ermöglicht, die Dosiervorrichtung 2 zuverlässig zwischen den Fingern zu halten. Wie aus Fig. 2 ersichtlich ist, bildet jeweils eine Seite der dreieckigen Mehrzahl von Laschen 18, 20, 22, 24 einen Randabschnitt des Rands 8, während die anderen zwei Seiten der dreieckigen Laschen durch die Faltlinien 26, 28, 30, 32, 34 gebildet sind, an denen jeweils zwei benachbarte Laschen aneinander angrenzen.

In der bevorzugten Ausführungsform nach Fig. 2 treffen die Laschen 18, 20, 22, 24 der Mehrzahl von Laschen in einem gemeinsamen Punkt 38 zusammen. Es versteht sich, dass dies nicht auf die dargestellte Anzahl von Laschen und deren dreieckige Form begrenzt ist, sondern dass auch mehr oder weniger Laschen mit einer dreieckigen oder einer anderen Form derart ausgebildet sein können, dass sie im gemeinsamen Punkt 38 zusammentreffen. Dies bewirkt, dass der Schüttbereich 6 im zweiten Zustand auf einer Seite geschlossen ist.

Um ein einfaches Falten des Zuschnitts 12 zur Dosiervorrichtung 2 sowie zwischen dem ersten und dem zweiten Zustand zu ermöglichen, sind die Faltlinien 26, 28, 30, 32, 34 des Zuschnitts 12 vordefiniert. Beispielsweise können die Faltlinien 26 bis 34 vorgefaltet sein, oder es kann eine Materialschwächung, wie z. B. eine Ritzlinie, Rillung oder Perforationslinie, entlang zumindest einer Faltlinie 26 bis 34 vorgesehen sein, die sich entlang zumindest eines Teils der Länge der jeweiligen Faltlinie 26 bis 34 erstreckt. Im Folgenden wird die Dosiervorrichtung 2 bzw. der Zuschnitt 12 mit Ritzlinien stellvertretend für verschiedene Arten der Vordefinition der Faltlinien beschrieben, auf die der Fachmann die beschriebenen Merkmale ohne Weiteres analog übertragen kann.

Die Ritzlinien sind in eine Vorder- bzw. Rückseite des Zuschnitts 12 eingebracht. Die Fig. 2 ist eine Draufsicht auf eine Vorderseite 40 des Zuschnitts 12, der eine Rückseite 42 des Zuschnitts 12 gegenüber liegt. In der dargestellten Ausführungsform sind die Ritzlinien entlang der Faltlinien 30, 32 ,34 zwischen jeweils zwei Laschen der Mehrzahl von Laschen 18, 20, 22, 24 auf der Vorderseite 40 des Zuschnitts 12 ausgebildet und die Ritzlinien entlang der ersten und der zweiten Faltlinie 26, 28, entlang derer die erste und die zweite Lasche 14, 16 an die Mehrzahl von Laschen 18 bis 24 angrenzen, sind auf der Rückseite 42 des Zuschnitts 12 ausgebildet, was in Fig. 2 durch die Kreuze auf der jeweiligen Faltlinie 26, 28 angedeutet ist. Es versteht sich, dass die Ritzlinien entsprechend ihrer Funktion auf der Vorder- oder Rückseite 40, 42 angeordnet sein können. Es können auch alle Ritzlinien auf einer Seite des Zuschnitts 12 angeordnet sein.

Der Zuschnitt 12 weist weiterhin ausgehend vom Rand 8 der Mehrzahl von Laschen 18, 20, 22, 24 eine Ausnehmung 44 auf, die vorzugsweise im Bereich einer Faltlinie 30 zwischen zwei aneinander grenzenden Laschen 18, 22 der Mehrzahl von Laschen 18, 20, 22, 24 ausgebildet ist. Eine solche Ausnehmung 44 bildet eine Griffmulde, die das Auffalten der Dosiervorrichtung 2 aus dem ersten in den zweiten Zustand vereinfacht, wie nachfolgend unter Bezugnahme auf Fig. 3b beschrieben ist.

In Fig. 3a ist die Dosiervorrichtung 2 im ersten Zustand in einer Draufsicht dargestellt. Im ersten Zustand ist die Dosiervorrichtung 2 derart gefaltet, dass sie eben ausgebildet ist und zwei Materiallagen 46, 48 der Dosiervorrichtung 2 bildet, die flächig aneinander anliegen. Der erste Zustand wird dadurch erreicht, dass der Zuschnitt 12 um eine Faltlinie, vorzugsweise um die Faltlinie 34 auf der Symmetrieachse 36, gefaltet wird, so dass die beidseitig dieser Faltlinie 34 angeordneten Abschnitte des Zuschnitts 12 flächig aneinander anliegen.

In der dargestellten Ausführungsform bilden die erste Lasche 14, die dritte Lasche 18 und die fünfte Lasche 22 die erste Materiallage 46 und die zweite Lasche 16, die vierte Lasche 20 und die sechste Lasche 24 bilden die zweite Materiallage 48 der Dosiervorrichtung 2. Die erste Lasche 14 und die zweite Lasche 16 liegen flächig aneinander an und sind miteinander verbunden. Vorzugsweise sind die erste und die zweite Lasche 14, 16 unlösbar miteinander verbunden, beispielsweise flächig miteinander verklebt. Der verständlicheren Darstellung halber ist die Position der ersten und der zweiten Faltlinie 26, 28 in der Draufsicht nach Figur 3a durch eine gestrichelte Linie angedeutet. Es ist ersichtlich, dass die Dosiervorrichtung 2 im ersten Zustand eben ausgebildet ist und eine geringe Dicke aufweist, die der Dicke der zwei Materiallagen 46, 48 entspricht, also der doppelten Dicke des Zuschnitts 12. In diesem Zustand kann die Dosiervorrichtung 2 platzsparend in oder an einer Verpackung von Schüttgut unter- bzw. angebracht werden.

Fig. 3b zeigt die Dosiervorrichtung 2 im ersten Zustand in einer Seitenansicht. Dabei ist zu erkennen, dass die zwei Materiallagen 46, 48 im Wesentlichen deckungsgleich ausgebildet sind. Dies kann dadurch erreicht werden, dass der Zuschnitt 12 symmetrisch zur Symmetrieachse 36 ausgebildet ist und um die Faltlinie 34 gefaltet ist, die auf der Symmetrieachse 36 liegt.

Eine Ausnahme von der symmetrischen Ausbildung bildet bevorzugt die Ausnehmung 44, die ausgehend vom Rand 8 der Mehrzahl von Laschen 18, 20, 22, 24 ausgebildet ist. Hier erstreckt sich die Ausnehmung 44 vom Rand 8 der dritten und der fünften Lasche 18, 22 im Bereich der dritten Faltlinie 30, ist also in der ersten Materiallage 46 ausgebildet. Die Ausnehmung 44 legt im ersten Zustand einen Teil der unter der ersten Materiallage 46 liegenden zweiten Materiallage 48 frei, hier also einen Teil der vierten und der sechsten Lasche 22, 24. Dadurch kann auf einfache Weise zwischen die zwei Materiallagen 46, 48 der Dosiervorrichtung 2 eingegriffen werden, um die Dosiervorrichtung 2 aus dem ersten Zustand in den zweiten Zustand nach Fig. 4 zu falten. Die Ausnehmung 44 kann auch an beliebiger anderer Stelle der Mehrzahl von Laschen 18, 20, 22, 24 ausgebildet sein. Die Ausnehmung 44 ist aber nicht zwingend erforderlich. Beispielsweise kann auch ohne die Ausnehmung 44 zwischen die Materiallagen 46, 48 eingegriffen werden, wobei auch ein Hilfsmittel verwendet werden kann. Alternativ kann die Dosiervorrichtung 2 auch aus dem ersten Zustand in den zweiten Zustand gefaltet werden, indem die Dosiervorrichtung 2 im Griffbereich 4 gehalten wird und ein Druck auf die Faltlinie 34 ausgeübt wird, die im ersten Zustand einen Rand der flachen Dosiervorrichtung 2 bildet.

In Fig. 3b ist zu erkennen, dass die Laschen der Mehrzahl von Laschen 18, 20, 22, 24 in einem gemeinsamen Punkt 38 zusammen laufen, wodurch der Schüttbereich nach unten hin geschlossen ist (siehe auch Fig. 1). Unabhängig von der Korngröße oder Konsistenz des aufzunehmenden Schüttguts wird dadurch sichergestellt, dass das Schüttgut sicher im Schüttbereich 6 der Dosiervorrichtung 2 gehalten wird. Der Schüttbereich 6 kann aber auch nach unten hin geöffnet sein, was beispielsweise dadurch erreicht wird, dass die Laschen der Mehrzahl von Laschen 18, 20, 22, 24 im Wesentlichen trapezförmig ausgebildet sind, wobei sie eine den Rand 8 bildende Seite und eine zu dieser parallel verlaufenden Seite umfassen. Anstelle des gemeinsamen Punkts 38 ist dann eine weitere, dem Rand 8 gegenüberliegende Öffnung im Schüttbereich 6 der Dosiervorrichtung 2 ausgebildet. Dadurch kann die Dosiervorrichtung 2 entweder als Trichter verwendet werden, oder diese Öffnung ist derart dimensioniert, dass sie kleiner als die Körner des aufzunehmenden Schüttguts ist, sodass Schüttgut dennoch zuverlässig im Schüttbereich 6 der Dosiervorrichtung 2 gehalten wird.

In Fig. 4 ist die Dosiervorrichtung 2 im zweiten Zustand in einer Draufsicht dargestellt. Im zweiten Zustand ist die Dosiervorrichtung 2 derart gefaltet, dass sich der Griffbereich 4 und der Schüttbereich 6 erkennbar voneinander unterscheiden und der Griffbereich 4 zum Greifen der Dosiervorrichtung 2 geeignet ist, während der Schüttbereich 6 zu Aufnahme von Schüttgut eingerichtet ist, da er nun aufgefaltet ist. Auch im zweiten Zustand liegen die erste und die zweite Lasche 14, 16 flächig aneinander an und sind miteinander verbunden. Die Laschen der Mehrzahl von Laschen 18, 20, 22, 24 liegen jedoch nicht mehr aneinander an, sondern bilden den Schüttbereich 6 umgebende Seitenwände 10. Dabei definiert der umlaufende Rand 8 der Mehrzahl von Laschen 18, 22, 24 eine Öffnung zum Einfüllen von Schüttgut in den Schüttbereich 6. Die Laschen 18, 20, 22, 24 erstrecken sich ausgehend von dem Rand 8, um eine Vertiefung zu bilden, in der das Schüttgut aufgenommen wird.

Die Laschen der Mehrzahl von Laschen 18, 20, 22, 24 sind schräg zueinander angeordnet und zwei aneinander angrenzende Laschen sind nur im Bereich der sie verbindenden Faltlinie miteinander verbunden und in Kontakt. Es versteht sich, dass die Gestalt des Schüttbereichs 6 durch die Anzahl und Form der Mehrzahl von Laschen, die diesen bilden, variiert werden kann. Je mehr Laschen vorgesehen werden, desto mehr nähert sich die Gestalt des Schüttbereichs 6 einer runden Form an. Der Innenwinkel zwischen zwei aneinander angrenzenden Laschen wird immer größer. Es reicht aber aus, wenn der Schüttbereich 6 aus zumindest zwei Laschen gebildet ist, von denen eine den Teilbereich des Schüttbereichs 6 zwischen der ersten Lasche 14 und der Faltlinie 34 bildet und die andere den Teilbereich des Schüttbereichs 6 zwischen der zweiten Lasche 16 und der Faltlinie 34 bildet. Im zweiten Zustand sind solche Laschen dann nach außen gekrümmt, da die Faltlinien 30, 32 nicht vorhanden sind.

Es versteht sich, dass die Gestalt der Dosiervorrichtung 2 beliebig an die gegebenen Anforderungen angepasst werden kann.

Wesentlich ist, dass die erste und die zweite Lasche 14, 16 sowohl im ersten als auch im zweiten Zustand flächig aneinander anliegen, miteinander verbunden sind und jeweils nur mittels genau einer Faltlinie mit einer den Schüttbereich 6 bildenden Lasche verbunden sind.

Zum Überführen aus dem ersten in den zweiten Zustand der Dosiervorrichtung 2 und umgekehrt ist es nicht notwendig, Verbindungen zwischen einzelnen Laschen der Dosiervorrichtung 2 herzustellen oder zu lösen. Vielmehr kann der Übergang einfach durch Auffalten des Schüttbereichs 6 erfolgen. Dennoch ist die Dosiervorrichtung 2 jederzeit in den ersten Zustand, in dem sie flach ausgebildet ist, zurückführbar. Insgesamt weist die Dosiervorrichtung 2 dadurch einen sehr einfachen Aufbau auf, ist günstig herzustellen und sehr einfach aus einem einteiligen Zuschnitt 12 zu bilden.

## Patentansprüche

1. Faltbare Dosiervorrichtung (2), die aus einem einteiligen Zuschnitt (12) gebildet ist und wiederholbar zwischen einem ersten Zustand und einem zweiten Zustand faltbar ist,
wobei die Dosiervorrichtung (2) im ersten Zustand derart gefaltet ist, dass sie eben ausgebildet ist und zwei Materiallagen (46, 48) der Dosiervorrichtung (2) bildet, die flächig aneinander anliegen,
wobei die Dosiervorrichtung (2) im zweiten Zustand derart gefaltet ist, dass sie einen Griffbereich (4) zum Greifen der Dosiervorrichtung (2) und einen Schüttbereich (6) zur Aufnahme von Schüttgut aufweist,
wobei der einteilige Zuschnitt (12) umfasst:
- eine erste Lasche (14) und eine zweite Lasche (16), die miteinander verbunden sind, im ersten und im zweiten Zustand flächig aneinander anliegen, und den Griffbereich (4) bilden; und
- eine Mehrzahl von Laschen (18, 20), die im zweiten Zustand den Schüttbereich (6) bilden, wobei die Mehrzahl von Laschen (18, 20) zumindest eine dritte und eine vierte Lasche (18, 20) umfasst, die im ersten Zustand flächig aneinander anliegen, wobei die dritte Lasche (18) entlang einer ersten Faltlinie (26) an die erste Lasche (14) angrenzt und die vierte Lasche (20) entlang einer zweiten Faltlinie (28) an die zweite Lasche (16) angrenzt,
wobei die erste Lasche (14) nur mit der dritten Lasche (18) eine gemeinsame Faltlinie (26) aufweist und die zweite Lasche (16) nur mit der vierten Lasche (20) eine gemeinsame Faltlinie (28) aufweist.

2. Dosiervorrichtung (2) nach Anspruch 1, **dadurch gekennzeichnet, dass** die Mehrzahl von Laschen (18, 20, 22, 24) eine gerade Anzahl von Laschen umfasst, von denen zwei Laschen (22, 24) entlang einer gemeinsamen Faltlinie (34) aneinander angrenzen, die im ersten Zustand und im zweiten Zustand in einer Ebene liegt, in der die erste Lasche (14) und die zweite Lasche (16) flächig aneinander anliegen.

3. Dosiervorrichtung (2) nach Anspruch 1 oder 2, **dadurch gekennzeichnet, dass** die Mehrzahl von Laschen (18, 20, 22, 24) eine fünfte und eine sechste Lasche (22, 24) umfasst, die im zweiten Zustand zusammen mit der dritten und der vierten Lasche (18, 20) den Schüttbereich (6) bilden, wobei die dritte Lasche (18) entlang einer dritten Faltlinie (30) an die fünfte Lasche (22) angrenzt, die vierte Lasche (20) entlang einer vierten Faltlinie (32) an die sechste Lasche (24) angrenzt, und die fünfte und die sechste Lasche (22, 24) entlang einer fünften Faltlinie (34) aneinander angrenzen.

4. Dosiervorrichtung (2) nach einem der vorangehenden Ansprüche, **dadurch gekennzeichnet, dass** die Laschen der Mehrzahl von Laschen (18, 20, 22, 24) jeweils eine Polygonform, vorzugsweise eine im Wesentlichen dreieckige Form aufweisen.

5. Dosiervorrichtung (2) nach einem der vorangehenden Ansprüche, **dadurch gekennzeichnet, dass** die Laschen der Mehrzahl von Laschen (18, 20, 22, 24) in einem gemeinsamen Punkt (38) zusammentreffen, sodass der Schüttbereich (6) sich zu dem gemeinsamen Punkt (38) hin verjüngt.

6. Dosiervorrichtung (2) nach einem der vorangehenden Ansprüche, **dadurch gekennzeichnet, dass** die Mehrzahl von Laschen (18, 20, 22, 24) im zweiten Zustand einen umlaufenden Rand (8) des Schüttbereichs (6) definieren, der eine Öffnung zum Einfüllen von Schüttgut in den Schüttbereich (6) bildet, und dass die Laschen (18, 20, 22, 24) ausgehend vom Rand (8) eine Vertiefung zum Aufnehmen von Schüttgut bilden.

7. Dosiervorrichtung (2) nach den Ansprüchen 5 und 6, **dadurch gekennzeichnet**, das sich die Vertiefung vom umlaufenden Rand (8) bis zum gemeinsamen Punkt (38) der Mehrzahl von Laschen (18, 20, 22, 24) erstreckt.

8. Dosiervorrichtung (2) nach einem der vorangehenden Ansprüche, **dadurch gekennzeichnet, dass** der Griffbereich (4) nur aus erster und zweiter Lasche (14, 16) besteht.

9. Dosiervorrichtung (2) nach einem der vorangehenden Ansprüche, **dadurch gekennzeichnet, dass** die erste und die zweite Lasche (14, 16) unlösbar miteinander verbunden sind, vorzugsweise flächig miteinander verklebt sind.

10. Dosiervorrichtung (2) nach Anspruch 9, **dadurch gekennzeichnet, dass** der Zuschnitt (12) schlitzfrei ausgebildet ist.

11. Dosiervorrichtung (2) nach einem der vorangehenden Ansprüche, **dadurch gekennzeichnet, dass** der Zuschnitt (12) ausgehend von einem Rand (8) der Mehrzahl von Laschen (18, 20, 22, 24) eine Ausnehmung (44) aufweist, die vorzugsweise im Bereich einer Faltlinie (30) zwischen zwei aneinander angrenzenden Laschen (18, 22) der Mehrzahl von Laschen (18, 20, 22, 24) ausgebildet ist.

12. Dosiervorrichtung (2) nach einem der vorangehenden Ansprüche, **dadurch gekennzeichnet, dass** der Zuschnitt (12) entlang zumindest einer Faltlinie (26, 28, 30, 32, 34) eine Ritzlinie aufweist, die sich mit der jeweiligen Faltlinie (26, 28, 30, 32, 34) deckt und sich zumindest entlang eines Teils der Länge der jeweiligen Faltlinie (26, 28, 30, 32, 34) erstreckt.

13. Dosiervorrichtung (2) nach Anspruch 12, **dadurch gekennzeichnet, dass** der Zuschnitt (12) eine Vorderseite (40) und eine Rückseite (42) aufweist, und dass die Ritzlinie entlang der ersten Faltlinie (26) und die Ritzlinie entlang der zweiten Faltlinien (28) auf der Rückseite (42) ausgebildet sind, und die Ritzlinie oder Ritzlinien, die entlang der Faltlinie (34) oder den Faltlinien (30, 32, 34) zwischen der Mehrzahl von Laschen (18, 20, 22, 24) ausgebildet sind, auf der Vorderseite (40) ausgebildet sind.

14. Dosiervorrichtung (2) nach Anspruch 13, **dadurch gekennzeichnet, dass** Flächen der ersten und der zweiten Lasche (14, 16), die die Vorderseite (40) des Zuschnitts (12) bilden, flächig aneinander anliegen.

15. Dosiervorrichtung (2) nach einem der vorangehenden Ansprüche, **dadurch gekennzeichnet, dass** die Dosiervorrichtung (2) derart ausgebildet ist, dass sie den zweiten Zustand selbständig beibehält.
